## Europäisches Patentamt
## European Patent Office
## Office européen des brevets

(11) Numéro de publication: **0 203 903**
**A1**

# DEMANDE DE BREVET EUROPEEN

(21) Numéro de dépôt: **86870065.9**

(22) Date de dépôt: **07.05.86**

(51) Int. Cl.⁴: **C 05 F 3/00**

(30) Priorité: **14.05.85 LU 85897**

(43) Date de publication de la demande: **03.12.86**
**Bulletin 86/49**

(84) Etats contractants désignés: **BE DE FR GB IT NL**

(71) Demandeur: **Van Vuchelen, Jean, Rue des Acacias, 17, B-5301 Fays-Achène (BE)**
Demandeur: **Wauthier, Daniel, 6, rue du Chateau-Ferme, B-Falaen (BE)**
Demandeur: **Gauthier, Gérard, 14, avenue Franchet d'Esperey, B-5500 Dinant (BE)**

(72) Inventeur: **Van Vuchelen, Jean, Rue des Acacias, 17, B-5301 Fays-Achene (BE)**
Inventeur: **Wauthier, Daniel, Rue du Château-Ferme, 6, B-Falaen (BE)**

(74) Mandataire: **De Brabanter, Maurice et al, Bureau VANDER HAEGHEN 63 Avenue de la Toison d'Or, B-1060 Bruxelles (BE)**

(54) Procédé de transformation de lisiers et produits obtenus par ce procédé.

(57) Procédé de transformation d'un lisier par addition à celui-ci d'un oxyde de métal alcalino-terreux, tel que de la chaux vive et/ou de la dolomie, de manière à obtenir une masse pâteuse ou solide sensiblement inodore, la quantité d'oxyde étant suffisante pour réagir avec au moins environ 20% du poids de l'eau contenue dans le lisier.

Le produit obtenu par le procédé constitue un amendement du sol que l'on utilise avantageusement pour être ajouté à des terres trop acides et manquant de chaux et/ou de magnésium.

PROCEDE DE TRANSFORMATION DE LISIERS ET PRODUITS OBTENUS
PAR CE PROCEDE.

La présente invention est relative à un procédé de transformation de lisiers, ainsi qu'aux produits obtenus par ce procédé.

On sait que les techniques nouvelles d'élevage industriel d'animaux tels que les bovins, les porcs, les poules et autres animaux produisent des quantités considérables de lisiers qui sont des mélanges aqueux de déjections solides et liquides de ces animaux.

Bien qu'ils puissent, dans certaines conditions et à certaines doses, être épandus sur les terres agricoles, les lisiers présentent de tels inconvénients que de nombreux éleveurs d'animaux se voient, à l'heure actuelle, contraints de supporter des frais d'enlèvement de leurs lisiers.

Sur le plan organoleptique, les lisiers se caractérisent par une odeur nauséabonde qui préoccupe les pouvoirs publics, au point que l'on peut craindre que ceux-ci imposent, à brève échéance, aux éleveurs de prendre des mesures pour faire disparaître cette odeur, en particulier dans les régions à densité de population relativement élevée. Dans ces conditions, le type d'élevage d'animaux donnant lieu à l'obtention de lisiers risque d'échapper aux éleveurs moyens et de devenir l'apanage de quelques grandes sociétés qui, seules, pourront faire face aux charges financières imposées par la construction et le fonctionnement de véritables stations d'épuration et de désodorisation.

Par ailleurs, l'épandage de lisiers sur les prairies et terres de culture peut présenter de nombreux inconvénients tels que

- l'apparition d'un phénomène de carence en certains oligo-éléments, comme le bore, le manganèse et le fer soit par insolubilisation à cause d'un excès de matières organiques facilement dégradables, soit par enterrement en profondeur dans le sol;

- l'apparition de phénomènes de phytotoxicité dus à la présence d'un excès de cuivre et/ou de fer apportés dans le sol par l'épandage de lisier de porcs;

- la dégradation de la structure du sol par lessivage;

- l'apparition d'un déséquilibre entre des éléments nutritifs au niveau de la couche arable du sol, par migration de ces éléments vers le sous-sol;

- la dégradation de la flore des pâtures par la prolifération de mauvaises herbes ou de plantes indésirables, telles que chiendent, mourron et pissenlit, formation à la surface du sol d'une croûte qui est une cause manifeste de dégradations de la flore;

- la diminution de l'appétance des animaux et donc de l'ingestion alimentaire avec augmentation des zones de refus dans les prairies;

3

- l'apparition accrue de parasites et agents pathogènes redoutables, tels que les Salmonella et autres microorganismes qui sont des causes de diverses maladies du bétail (notamment l'avortement chez les bovins) et dont la persistance dans la terre humide et les matières fécales peut atteindre plusieurs mois, et

- les phénomènes de pollution de l'environnement, des eaux de surfaces et des nappes aquifères souterraines.

On a proposé divers traitements des lisiers pour remédier aux inconvénients cités plus haut, mais ces traitements n'ont pas donné satisfaction pour diverses raisons, notamment leur coût, leur efficacité aléatoire, leur caractère partiel, voire même leur inefficacité.

Parmi les traitements connus, on peut citer à titre illustratif, les suivants :

(1) Méthode des caniveaux oxydants

Ce procédé consiste à maintenir du lisier de bovin en mouvement, au moyen d'une brosse cylindrique, dans un caniveau de forme annulaire dont le volume est d'environ 1,5 $m^3$ par bovin, de manière à aérer et oxyder la matière organique contenue dans le lisier, le cas échéant par injection d'ozone, le résidu obtenu étant évacué dans un puits de filtration.

## (2) Procédé de déshydratation

Ce procédé consiste à faire passer le lisier, sous forme d'une mince nappe, sur un cylindre porté à haute température et tournant lentement.

## (3) Fosses septiques

On a songé à utiliser le principe des fosses septiques pour le lisier, mais cette utilisation exige des ouvrages ayant un volume considérable (2 m$^3$/animal adulte).

## (4) Lagons

On a également proposé de déverser les lisiers dans des bassins (lagons) ayant une surface importante, où ils sont soumis à une décantation, une oxydation et une évaporation naturelle. Les lagons doivent être périodiquement mis hors service, asséchés et curés.

## (5) Procédé de méthanisation

Ce procédé est efficace, mais il exige des investissements importants et pose le problème de l'évacuation des résidus. Par ailleurs, la température (30 à 35°C) nécessaire à la fermentation exige une consommation importante d'énergie surtout en période hivernale, pendant les périodes de gel.

5

## (6) Filtration ou tamisage

On a envisagé aussi de soumettre le lisier à une filtration, un tamisage ou une centrifugation pour en diminuer la charge organique et activer l'épuration biologique de celle-ci, mais ces traitements sont lents et insuffisants.

## (7) Traitement enzymatique

On a proposé encore de traiter les lisiers par des antioxydants et des enzymes (odorases) dans le but d'empêcher le dégagement des mauvaises odeurs..

(8) On a même suggéré de recouvrir les fosses contenant du lisier à l'aide de boules ou autres revêtements, par exemple en polyéthylène, dans le but de réduire les dégagements d'ammoniac et d'hydrogène sulfuré, mais cette méthode est peu efficace et pose le problème de l'évacuation des résidus.

La présente invention a pour objet un procédé simple et efficace permettant la transformation du lisier en un produit solide utile dans le domaine agricole.

On a constaté à présent qu'il est possible, en un laps de temps très court, de transformer le lisier en une matière solide dépourvue de toute odeur, par simple traitement de ce lisier à l'aide d'un oxyde de métal alcalino-terreux, de préférence d'oxyde de calcium (chaux vive) et/ou de magnésium (dolomie).

6

Le procédé suivant l'invention est essentiellement caractérisé en ce qu'on met du lisier en contact avec un oxyde de métal alcalino-terreux jusqu'à obtention d'une masse pâteuse ou solide exempte d'odeur.

Suivant l'invention, on met un lisier quelconque en contact avec de la chaux vive en quantité telle que celle-ci réagisse avec au moins 20 % et de préférence avec 25 % en poids de l'eau contenue dans le lisier.

On utilise, de préférence, la chaux vive à l'état non pulvérisé, c'est-à-dire sous forme de morceaux grossiers ou de roches. Cette chaux vive est obtenue par cuisson à une température d'environ 900 à 1300°C dans un four à chaux.

Après un temps de contact très court (inférieur à environ 3 minutes), on obtient un produit ayant un aspect sec ayant perdu son odeur nauséabonde.

La réaction entre le lisier et l'oxyde de calcium et/ou de magnésium est fortement exothermique et provoque l'évaporation sous forme de vapeur d'eau, dont la température peut atteindre environ 115 à 120°C, d'au moins 30 % de l'eau contenue dans le lisier.

Suivant le procédé de l'invention, on récupère la chaleur produite par la réaction entre l'oxyde et le lisier, soit pour préchauffer du lisier à traiter, soit pour en déshydrater thermiquement une partie, soit encore à toute autre fin, notamment pour préchauffer un carburant liquide ou gazeux ou pour chauffer un fluide tel que de l'eau d'une installation de chauffage central ou de l'eau d'une installation de distribution d'eau chaude.

Le procédé suivant la présente invention permet une récupération de calories de l'ordre de 50 à 80 % selon les investissements effectués pour cette récupération.

Le produit obtenu par le procédé suivant la présente invention est un produit contenant environ 45 à 50 % en poids de CaO ou de CaO et MgO sous forme éteinte. Ce produit contient, au surplus,

- environ 25 à 35 % en poids d'eau;

- environ 7 à 11 % en poids de matières organiques;

- environ 0,15 à 0,25 % en poids d'azote total;

- environ 0,25 à 0,45 % d'anhydride phosphorique ($P_2O_5$), et

- environ 0,35 à 0,50 % en poids d'oxyde de potassium.

Ce produit constitue un amendement calcique du sol, qui contient toujours la matière organique du lisier, ainsi que le phosphore et le potassium qui constituent des éléments fertilisants, ainsi qu'une partie de l'azote contenu dans le lisier.

8

Cet amendement est utile en agriculture, en particulier dans les pays, comme la Belgique, où 75 % des terres sont trop acides et manquent de chaux et/ou de magnésium.

Le produit suivant l'invention peut être épandu sans difficulté, par exemple à l'aide d'un épandeur à fumier, à une dose de 3000 à 4000 kilos par hectare, de manière à élever le pH du sol d'une unité en moyenne.

Le produit suivant l'invention peut également servir de matière première pour la fabrication de fertilisants ou d'engrais par exemple du type N-P-K par addition de matières azotées, ainsi que de matières phosphorées et potassiques.

L'invention est également relative à une composition fertilisante contenant, outre du lisier traité par de la chaux et/ou de la dolomie, une matière minérale ou organique azotée et éventuellement une matière phosphorée et/ou une matière potassique.

D'autres particularités de l'invention ressortiront de la description d'exemples illustratifs du procédé suivant l'invention, ainsi que de produits obtenus par ce procédé et de compositions fertilisantes contenant ces produits.

Dans ces différents exemples, on a utilisé des lisiers ayant des compositions variables, notamment en fonction des

9

types d'animaux dont ils proviennent, de l'état physiologique de ces animaux, du type d'alimentation qu'ils absorbent, ainsi que du type d'étable ou d'installation servant à récolter le lisier.

EXEMPLE 1

1000 kilogrammes d'un lisier provenant de bovins de composition suivante

| | |
|---|---|
| matières sèches | 13 % |
| matières organiques | 11 % |
| azote total | 0,5 % |
| $P_2O_5$ | 0,3 % |
| $K_2O$ | 0,6 % |
| CaO | 0,3 % |
| eau | 87 % |

ont été mis en contact avec 800 kg de chaux vive en roches contenant 89 % de CaO pendant 3 minutes.

On a obtenu environ 1360 kg d'un produit d'aspect sec contenant environ 28 % d'eau et environ 47 % de CaO sous forme de chaux éteinte.

La réaction entre le lisier et la chaux vive a libéré un peu plus de 200.000 kilocalories, dont 50 à 80 % sont récupérables.

10

Ce produit a été utilisé comme amendement, en l'épendant à raison de 4000 kg par hectare à l'aide d'un épandeur à fumier. Cet épandage a permis d'élever d'environ 1 unité le pH de la terre.

EXEMPLE 2

1000 kg d'un lisier provenant de porcs de composition suivante

| | | |
|---|---|---|
| matières sèches | 10 | % |
| matières organiques | 8 | % |
| azote total | 0,55 | % |
| $P_2O_5$ | 0,48 | % |
| $K_2O$ | 0,3 | % |
| CaO | 0,25 | % |
| eau | 90 | % |

ont été mis en contact pendant 3 minutes avec 820 kg de chaux vive titrant environ 90 % de CaO.

On a obtenu 1400 kg d'un produit contenant 26 % d'eau et 52 % de CaO sous forme de chaux éteinte.

EXEMPLE 3

500 kg d'un lisier provenant de poules de composition suivante

| matières sèches | 35 | % |
|---|---|---|
| matières organiques | 29 | % |
| azote total | 1,5 | % |
| $P_2O_5$ | 2 | % |
| $K_2O$ | O,6 | % |
| CaO | 1,7 | % |
| eau | 65 | % |

ont été mis en contact avec 280 kg de chaux vive à 97 % de CaO pendant quelques minutes.

On a obtenu 675 kg d'un produit solide contenant 26 % d'eau et 40 % de CaO sous forme de chaux éteinte.

EXEMPLE 4

1 tonne de boue d'épuration urbaine provenant de fosses septiques d'habitations contenant

    12 % de matières sèches
     8 % de matières organiques
    O,5 % d'azote total
    0,7 % de $P_2O_5$
    0,1 % de $K_2O$, et
    88 % d'eau

a été traitée par 850 kg de chaux vive à 92 % de CaO pendant 2 minutes.

On a obtenu une masse d'aspect sec contenant 28 % d'eau et 46 % de CaO sous forme de chaux éteinte.

## EXEMPLE 5

Des essais complémentaires ont été effectués avec des lisiers de bovins et de porcs et des boues d'épuration ayant les compositions moyennes suivantes

| | Matières sèches | Matières organiques | Azote total | $P_2O_5$ | $K_2O$ |
|---|---|---|---|---|---|
| Lisiers | 8-15 % | 6-12 % | 0,4-0,6 % | 0,2-0,5 % | 0,3-0,5 % |
| Boues | 6-15 % | 4,5-9 % | 0,45-0,6 % | 0,4-0,85 % | 0,05-0,15 % |

auxquels on a ajouté une quantité de chaux vive ou dolomie suffisante pour provoquer, en l'espace de quelques minutes, une déshydratation suffisante pour obtenir une masse d'aspect sec titrant de 45 à 50 % de CaO sous forme de chaux éteinte et 25 à 35 % d'eau.

Dans chaque cas, la quantité de chaux ou de dolomie correspondait à 20 à 35 % de la quantité pondérale nécessaire pour des réactions d'extinction avec l'eau contenue dans les lisiers ou les boues.

Dans tous les cas, le produit obtenu était dépourvu d'odeur et présentait un aspect suffisamment sec pour pouvoir être stocké, manipulé et épandu sans difficultés.

13

On a constaté que, grâce à la réaction exothermique entre la chaux vive ou la dolomie et l'eau, les produits obtenus étaient pratiquement stériles sur le plan bactériologique.

**EXEMPLE 6**

On a préparé une composition fertilisante calcique calquée sur la formule d'origine commerciale N-P-K 8-16-8, en mélangeant 3200 kg du produit obtenu dans l'exemple 1 avec 87 kg d'urée(contenant 46 % d'azote), 160 kg de phosphate bicalcique à 48 % de $P_2O_5$ et 100 kg de chlorure de potassium contenant 40 % de $K_2O$.

On a ainsi obtenu 3547 kg d'un mélange qui, épandu sur un hectare, a apporté au sol

1500 unités par hectare de CaO;
40 unités par hectare de N;
80 unités par hectare de $P_2O_5$, et
40 unités par hectare de $K_2O$.

Sans tenir compte de la main d'oeuvre nécessaire pour effectuer deux épandages, à savoir un épandage de 500 kg/hectare d'un engrais N-P-K du commerce et un chaulage à 1500 kg/hectare, on a constaté qu'en épandant, en une seule fois, 3547 kg/hectare de la composition fertilisante obtenue de la manière décrite ci-dessus, on a pu effectuer une économie de plus de 30 % sur le prix des matières mises en oeuvre.

14

L'homme de métier ne pouvait s'attendre à ce qu'une composition fertilisante calcique obtenue au départ du produit solide préparé par traitement de lisier au moyen de chaux vive (voir exemple 1) soit beaucoup moins coûteuse, rien que sur le plan du coût des matières utilisées, que la somme d'un engrais N-P-K du commerce et de chaux éteinte utilisée pour le chaulage.

Il est à noter que le terme "lisier" tel qu'il est utilisé dans le présent mémoire désigne aussi bien les mélanges aqueux de déjections (matières fécales et urine) animales que les mélanges aqueux de déjections d'origine humaine.

15

## REVENDICATIONS

1. Procédé de transformation d'un lisier, caractérisé en ce qu'on met du lisier en contact avec une quantité suffisante d'un oxyde de métal alcalino-terreux pour obtenir une masse pâteuse ou solide sensiblement inodore.

2. Procédé suivant la revendication 1, caractérisé en ce qu'on met le lisier en contact avec de la chaux vive et/ou de la dolomie.

3. Procédé suivant l'une quelconque des revendications 1 et 2, caractérisé en ce qu'on utilise une quantité de chaux vive et/ou de dolomie suffisante pour réagir avec au moins environ 20 % du poids de l'eau contenue dans le lisier.

4. Procédé suivant la revendication 3, caractérisé en ce que la quantité de chaux vive et/ou de dolomie est suffisante pour réagir avec environ 25 % du poids de l'eau contenue dans le lisier.

5. Procédé suivant l'une quelconque des revendications précédentes, caractérisé en ce qu'on utilise de la chaux vive anhydre sous forme de morceaux grossiers ou roches obtenus par cuisson de pierre calcaire dans un four à chaux à une température d'environ 950 à 1300°C.

6.    Procédé suivant l'une quelconque des revendications précédentes, caractérisé en ce qu'on récupère la  chaleur produite par la réaction exothermique entre le lisier et la chaux vive et/ou dolomie.

7.    Procédé suivant la revendication 6, caractérisé  en  ce  qu'on utilise la  chaleur  récupérée  pour préchauffer du lisier à traiter.

8.    Procédé suivant la revendication 6, caractérisé  en  ce  qu'on utilise la chaleur  récupérée  pour déshydrater du lisier.

9.    Procédé suivant la revendication 6, caractérisé  en  ce  qu'on utilise la chaleur  récupérée  pour chauffer un fluide,  tel qu'un combustible ou un fluide de chauffage.

10.    Produit pour amender des terrains agricoles, caractérisé en ce qu'il contient environ

- 45  à  50 % en poids de CaO ou de CaO et  MgO  sous  la éteinte,
- 25 à 35 % en poids d'eau,
- 7 à 11 % en poids de matières organiques,
- 0,15 à 0,25 % en poids d'azote total,
- 0,25 à 0,45 % en poids d'anhydride phosphorique, et
- 0,35 à 0,50 % en poids d'oxyde de potassium.

11. Produit d'amendement suivant la revendication 10, caractérisé en ce qu'il est à base de lisier déshydraté au moyen de chaux vive et/ou de dolomie.

12. Composition fertilisante, caractérisée en ce qu'elle contient un produit suivant l'une quelconque des revendications 10 et 11, additionné d'une matière minérale ou organique azotée et/ou d'une matière potassique et/ou d'une matière phosphorée.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 294 147 (BAZIAN)<br><br>* Page 2, lignes 1-15; page 5, lignes 1-12 * | 1-8,10 -12 | C 05 F 3/00 |
| X | GB-A- 471 067 (A.J. LEE)<br>* Revendications 1-5 * | 1-5,12 | |
| X | CHEMICAL ABSTRACTS, vol. 99, no. 1, 1983, page 437, résumé no. 4675r, Columbus, Ohio, US; & JP - A - 58 41 787 (Y. KOBAYASHI et al.) 11-03-1983<br>* En entier * | 1-8 | |
| X | FR-A-2 065 586 (DEBBELER)<br><br>* Page 1; page 2, ligne 15 * | 1-5,10 -12 | **DOMAINES TECHNIQUES RECHERCHES (Int. Cl.4)**<br><br>C 05 F |

Le présent rapport de recherche a été établi pour toutes les revendications

| Lieu de la recherche | Date d'achèvement de la recherche | Examinateur |
|---|---|---|
| LA HAYE | 04-09-1986 | VERHOEST J.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82